# FASCICULE DE BREVET EUROPEEN

(11) **EP 2 434 726 B1**
(45) Date de publication et mention de la délivrance du brevet: **13.05.2020**
(21) Numéro de dépôt: 11180843.2
(22) Date de dépôt: 12.09.2011
(51) Int. Cl.: H04L 29/08, H04L 12/58

(54) **TERMINAL ET PROCÉDÉ DE COLLECTE D'INFORMATIONS NON DÉCLARATIVES MIS EN OEUVRE PAR UN TERMINAL DE TÉLÉCOMMUNICATIONS**
ENDGERÄT UND VERFAHREN ZUM SAMMELN VON NICHT DEKLARATIVE INFORMATIONEN DURCH EIN TELEKOMMUNIKATIONS-ENDGERÄT IMPLEMENTIERT
TERMINAL AND METHOD FOR COLLECTING NON-DECLARATIVE INFORMATION IMPLEMENTED IN A COMMUNICATION TERMINAL

(30) Priorité: 27.09.2010 FR 1057753
(43) Date de publication de la demande: 28.03.2012
(73) Titulaire: Orange, 75015 Paris (FR)
(72) Inventeur: Le Huerou, Emmanuel, 22700 SAINT QUAY PERROS (FR); Beaufils, Eric, 22450 LANGOAT (FR)
(74) Mandataire: Cabinet Beau de Loménie

(56) Documents cités:
- US-A1- 2006 015 609
- US-A1- 2006 148 477

## Description

### Arrière-plan de l'invention

La présente invention se situe dans le domaine général des réseaux de télécommunications. Elle vise plus particulièrement à améliorer la joignabilité les utilisateurs des terminaux mettant en œuvre une pluralité d'applications.

Historiquement, les terminaux mobiles ne comportaient qu'une seule fonction de téléphonie, par exemple une fonction GSM, native sur le terminal.

Depuis peu, avec l'apparition des terminaux intelligents (en anglais « Smartphone ») il est devenu aisé d'installer de nouvelles applications de communication, par exemple des communications de voix sur IP (VoIP).

De telles applications offrent une nouvelle ligne de communication via une connexion Internet.

Dans l'état actuel de la technique, les différentes applications de téléphonie mobile fonctionnent de façon cloisonnée, ce qui signifie qu'elles sont parfaitement indépendantes, autrement dit qu'elles ne communiquent pas entre elles au sein du terminal.

Par conséquent, lorsque l'utilisateur d'un tel terminal est en communication téléphonique en utilisant la fonction native de téléphonie de son téléphone (communication GSM par exemple), rien n'empêche un tiers de l'appeler sur ce même terminal sur l'application de type voix sur IP.

Cette situation n'est pas satisfaisante, l'utilisateur n'étant en pratique pas en mesure de répondre à ce deuxième appel. Les documents D1: US 2006/015609 A1 (HAGALE ANTHONY R [US] ET AL (2006-01-19)) et D2: US 2006/148477 A1 (REILLY JAMES [FI], (2006-07-06)) décrivent un procédé pour déduire le statut d'un utilisateur.

### Objet et résumé de l'invention

L'invention vise un module et un procédé permettant à un tiers de connaître ou d'appréhender l'usage réel qu'un utilisateur fait de son terminal.

L'invention vise un terminal et un procédé tels que décrits par les revendications 1 et 10 respectivement.

Le terminal mettant en oeuvre l'invention peut être un terminal fixe ou mobile, et notamment un ordinateur, un téléphone mobile, un organiseur personnel ou une télévision.

L'invention est particulièrement avantageuse lorsque les applications de ce terminal ne communiquent pas entre elles (mode silo) ; mais l'invention s'applique également lorsque les applications peuvent communiquer entre elles.

Ainsi, d'une façon générale, l'invention propose d'utiliser un module de collecte d'informations pour collecter des informations représentatives de l'usage réel des applications par l'utilisateur afin d'alimenter un serveur de présence.

Il est important de bien noter que dans l'état actuel de la technique, les serveurs de présence sont utilisés pour informer les tiers d'informations déclaratives de l'utilisateur du terminal en relation avec une application donnée.

Par exemple, on utilise aujourd'hui des serveurs de présence pour permettre à l'utilisateur d'une application de messagerie instantanée d'informer volontairement (information dite déclarative) les tiers de son état de disponibilité sur cette application (disponible, occupé,...).

Mais l'invention propose d'enrichir fortement de tels serveurs de présence en mettant à disposition des tiers, et ce de façon automatique, l'information d'usage de plusieurs applications du terminal.

Par exemple, la première application au sens de l'invention peut être une application de téléphonie mobile, l'information d'usage associée représentant le fait qu'un appel est établi ou non avec cette première application; cette information d'usage peut aussi comporter des informations complémentaires, par exemple un identifiant du contact en cours de communication avec sa première application.

Dans un autre mode de réalisation, la première application peut être une application apte à générer une alerte sur réception d'un appel entrant reçu par le terminal, l'information d'usage associée représentant un type de cette alerte.

Dans ce mode de réalisation, il devient donc possible à un tiers de savoir si le terminal de l'utilisateur est en mode vibreur ou sonnerie par exemple.

Dans un autre mode de réalisation, la première application peut être une application de messagerie, l'information d'usage associée représentant le fait qu'un message est ou non en cours de rédaction par le terminal.

Ainsi, un tiers peut savoir si l'utilisateur du terminal est occupé ou non à rédiger un message.

Dans un autre mode de réalisation, la première application peut être une application de géolocalisation, les informations d'usage représentant la localisation du premier terminal.

Ainsi, un tiers peut savoir si l'utilisateur du terminal est par exemple au bureau, à la plage, ou sur l'autoroute.

Chacune des informations d'usage peut donc être communiquée, de façon automatique à un serveur de présence associé à au moins une deuxième application du terminal.

Cette deuxième application peut par exemple être une application de voix sur IP ou une application de jeu en réseau. Dans ce deuxième exemple, les partenaires de jeu de l'utilisateur du terminal peuvent comprendre, s'ils ne trouvent pas ce dernier suffisamment réactif, que cet utilisateur est en cours de communication, ou occupé à une autre tâche (rédaction d'un message, probablement en train de conduire, ...).

Le module de collecte selon l'invention peut être intégré à cette deuxième application. Par exemple, le module de collecte peut être intégré à une application de voix sur IP installée dynamiquement sur le terminal.

En variante, dans un mode particulier avantageux, le module de collecte est intégré au système d'exploitation du terminal, ce module de collecte offrant une interface de programmation (API en anglais) aux deuxièmes applications (applications de jeu ou de voix sur IP par exemple).

Dans un mode particulier de réalisation, les différentes étapes du procédé de collecte d'informations sont déterminées par des instructions de programmes d'ordinateur.

En conséquence, l'invention vise aussi un programme d'ordinateur sur un support d'informations, ce programme étant susceptible d'être mis en œuvre par un ordinateur, ce programme comportant des instructions adaptées à la mise en oeuvre des étapes du procédé de collecte d'informations tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire de type *flash,* telle qu'une clé USB.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

Sur les figures :
- les figures 1 à 3 représentent, dans différents modes de réalisation un module de collecte et un terminal conformes à l'invention ; et
- la figure 4 représente, sous forme d'organigramme, les principales étapes d'un procédé de collecte d'informations conforme à un mode particulier de réalisation de l'invention.

D'autres caractéristiques et avantages de l'invention ressortiront de la description faite ci-dessous en référence aux dessins annexés qui en illustrent un exemple de réalisation dépourvu de tout caractère limitatif.

### Description détaillée de l'invention

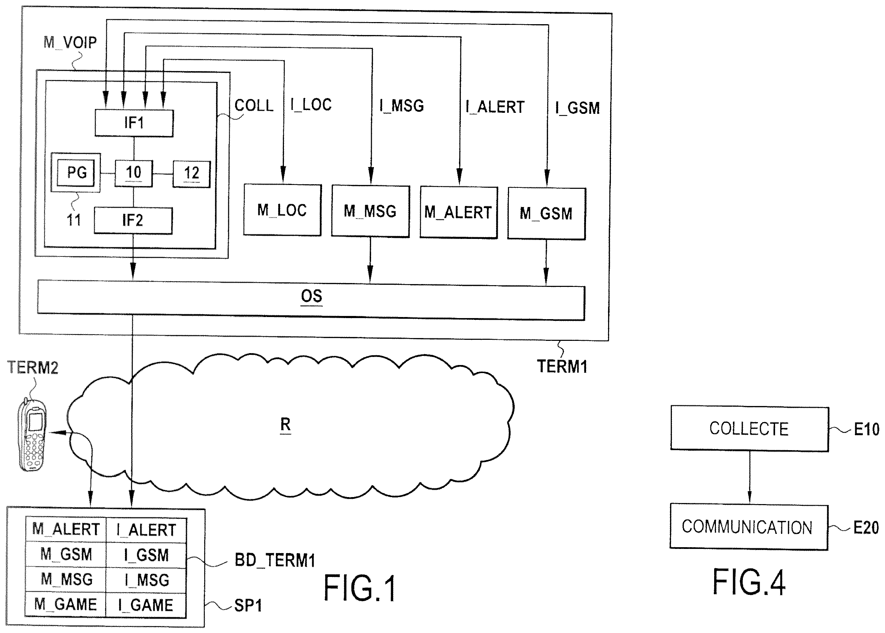

En référence à la **figure 1****,** on a représenté un terminal TERM1 conforme à l'invention.

Dans ce mode de réalisation, le terminal TERM1 est un téléphone mobile apte à communiquer, via un réseau de télécommunications R de type GSM, avec un serveur de présence SP1, ce dernier étant consultable à tout moment par un terminal TERM2.

Le terminal TERM1 comporte un module de collecte COLL conforme à l'invention.

Dans le mode de réalisation décrit ici, ce module de collecte est intégré à une application M_VOIP de voix sur IP.

Dans le mode de réalisation décrit ici, le module de collecte COLL comporte un processeur 10, une mémoire morte de type ROM 11 et une mémoire vive 12. En variante, le module de collecte COLL pourrait partager ces ressources avec le terminal TERM1.

La mémoire morte 11, lisible par le processeur 10 constitue un support d'enregistrement conforme à l'invention sur lequel est enregistré un programme d'ordinateur PG conforme à l'invention pour exécuter les étapes du procédé de collecte d'informations représenté sous forme d'organigramme à la figure 4.

On suppose que le terminal TERM1 de la figure 1 comporte quatre applications, à savoir :
- un module M_GSM de téléphonie mobile conforme au protocole GSM, cette application étant native sur le terminal TERM1 ;
- une application M_ALERT apte à générer une alerte (sonnerie, vibreur,...) sur réception d'un appel entrant reçu par le module M_GSM ;
- une application M_MSG de messagerie (par exemple de type SMS) ; et
- une application M_LOC de géolocalisation.

Conformément à l'invention, le module de collecte d'informations COLL est apte à obtenir une information non déclarative représentative d'au moins un usage de chacune de ces applications.

Dans cet exemple, on suppose :
- que le module de communication M_GSM fournit des informations d'usage I_GSM représentatives d'un état d'occupation de l'application (communication établie ou non), et, si l'utilisateur du terminal TERM1 le permet, de son interlocuteur ;
- que l'application M_ALERT fournit le type d'alerte I-ALERT mis en œuvre par ce module (sonnerie, alerte) ;
- que le module de messagerie M_MSG fournit une information non déclarative selon laquelle l'utilisateur est en train de rédiger un message ; et
- que le module de localisation M_LOC fournit une information de localisation de l'utilisateur.

Dans cet exemple, l'information I_MSG est obtenue à partir du système d'exploitation OS dès lors qu'une fenêtre de saisie d'un message est ouverte.

On notera, dans l'exemple de la figure 1 que le module de collecte COLL obtient ces informations d'usage soit directement à partir des applications (I_LOC, I_ALERT), soit à partir du système d'exploitation OS du terminal TERM1 (pour I_MSG et I_GSM).

On appelle, dans cet exemple IF1 l'interface du module de collecte COLL apte à obtenir ces informations d'usage. Différents modes de réalisation peuvent être mis en oeuvre pour obtenir ces informations. Par exemple, le module de collecte COLL peut interroger régulièrement certaines applications (mode polling) ; il peut aussi s'abonner à des alertes pour obtenir les informations non déclaratives lorsque celles-ci sont disponibles.

Conformément à l'invention, le module de collecte COLL comporte également une interface IF2 pour communiquer ces informations d'usage non déclaratives au serveur de présence SP1.

Dans l'exemple de réalisation décrit ici, le serveur de présence SP1 comporte par conséquent une base de données BD_TERM1 comportant les informations d'usage non déclaratives des applications du premier terminal, ces informations pouvant être consultées par l'utilisateur du terminal TERM2 à tout moment, et notamment avant d'appeler le terminal TERM1.

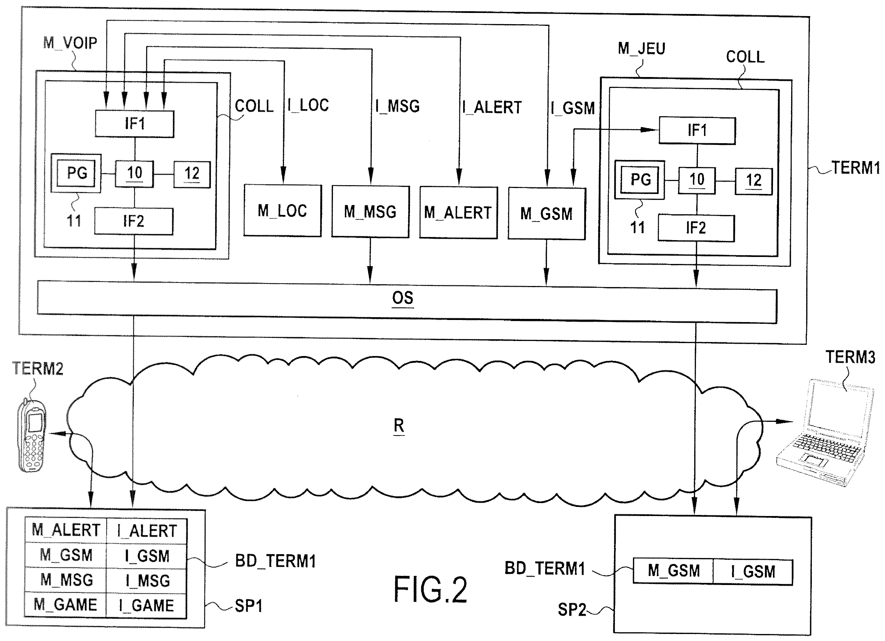

Dans le mode de réalisation de la **figure 2****,** on suppose que l'utilisateur du terminal TERM1 a également téléchargé un module de jeu M_JEU, celui-ci incorporant son propre module de collecte COLL.

Ce deuxième module de collecte est dans cet exemple uniquement adapté à obtenir les informations d'usage I_GSM en interrogeant directement le module de communication GSM.

On suppose dans cet exemple que ce deuxième module de collecte COLL alimente un deuxième serveur de présence SP2.

En variante, les deux modules de collecte intégrés respectivement au module de voix sur IP M_VOIP et au module de jeu M_JEU pourraient alimenter le même serveur de présence SP1 ou SP2.

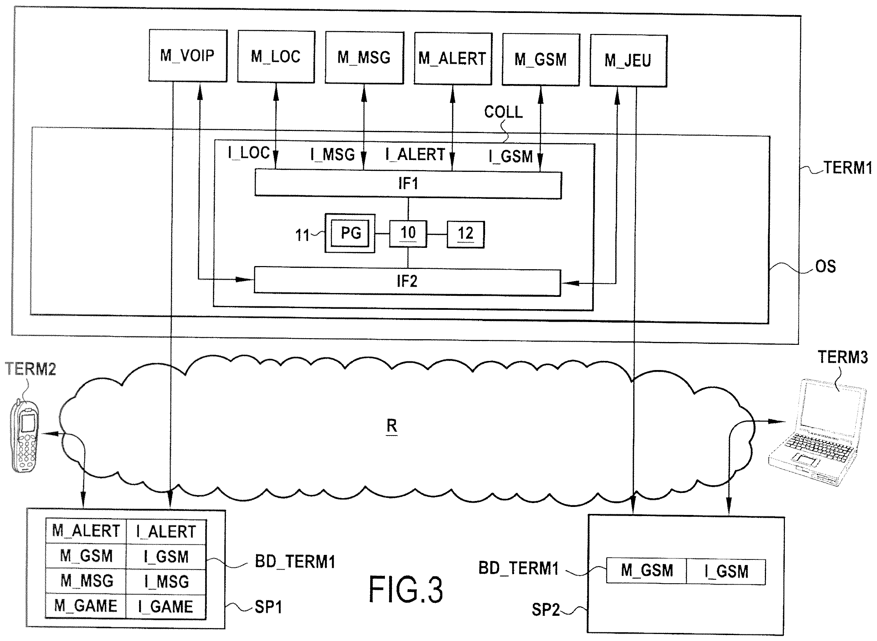

Dans l'exemple de la **figure 3****,** le module de collecte COLL est intégré au système d'exploitation OS du terminal TERM1.

Dans ce mode de réalisation, ce module offre une interface de programmation (API) aux développeurs des applications M_VOIP et M_JEU.

Ce mode de réalisation est particulièrement avantageux car le développeur de ces applications n'a pas à se soucier des autres applications mises en oeuvre par le terminal (localisation, messagerie, téléphonie native et alerte), le système d'exploitation OS étant apte à obtenir des informations d'usage et à les mettre à disposition des applications via l'interface de programmation.

En référence à la **figure 4****,** on a représenté les principales étapes d'un procédé de collecte de formation conforme à l'invention.

Ce procédé comporte principalement deux étapes, à savoir :
- une étape E10 de collecte des informations d'usage auprès des premières applications, cette obtention pouvant se faire notamment par polling ou par notification ; et
- une étape E20 de communication de ces informations au serveur de présence associé à au moins une autre application, par exemple au moyen d'une interface de programmation API offerte par un module de collecte selon l'invention.

Dans le mode de réalisation décrit précédemment, les serveurs de présence SP1, SP2 sont des serveurs centralisés. En variante, la fonction serveur de présence pourrait être distribuée dans les terminaux TERM1, TERM2, TERM3 eux-mêmes, ces terminaux formant ainsi un réseau de pairs.

## Revendications

1. Terminal de communications (TERM1) comportant un module de collecte d'informations (COLL), ce module comportant :
- des moyens (IF1) pour obtenir de manière automatique au moins une information (I_GSM, I_ALERT, I_LOC) représentative d'un usage d'au moins une première application (M_GSM, M_ALERT, M_MSG, M_LOC) par ledit terminal (TERM1) ; et
- des moyens (IF2) pour communiquer de manière automatique ladite au moins une information d'usage à un serveur de présence (SP) accessible par un deuxième terminal (TERM2) pour déterminer un statut de présence associé à au moins une deuxième application (M_VOIP, M_JEU) utilisable par ledit terminal (TERM1) comportant ledit module de collecte (COLL), ladite deuxième application et ladite première application ne communiquant pas entre elles, ledit module de collecte (COLL) étant intégré à un système d'exploitation dudit terminal (TERM1), ledit module de collecte (COLL) offrant un point d'entrée (IF2) à ladite au moins une deuxième application (M_JEU, M_VOIP).

2. Terminal selon la revendication 1, ledit terminal étant un téléphone mobile, **caractérisé en ce que** :
- ladite première application (M_GSM) est une application de téléphonie mobile ; et **en ce que** :
- ladite information d'usage (I_GSM) est une information représentant le fait qu'un appel est établi ou non avec ladite première application (M_GSM).

3. Terminal selon la revendication 2, **caractérisé en ce que** :
- ladite information d'usage (I_GSM) est une information comportant un identifiant d'un contact en cours de communication en utilisant ladite première application (M_GSM).

4. Terminal selon la revendication 1, ledit terminal étant un téléphone mobile, **caractérisé en ce que** :
- ladite première application (M_ALERT) est apte à générer une alerte sur réception d'un appel entrant reçu par ledit terminal (TERM1) ; et **en ce que** :
- ladite information d'usage (I_ALERT) représente un type de ladite alerte.

5. Terminal selon la revendication 1, **caractérisé en ce que** :
- ladite première application (M_MSG) est une application de messagerie ; et **en ce que** :
- ladite information d'usage (I_MSG) représente le fait qu'un message est ou non en cours de rédaction.

6. Terminal selon la revendication 1, **caractérisé en ce que** :
- ladite première application (M_LOC) est une application de géo-localisation; et **en ce que** :
- ladite information d'usage (I_LOC) représente une information de localisation dudit terminal.

7. Terminal selon la revendication 1, **caractérisé en ce que** ladite deuxième application (M_VOIP) est une application de voix sur Internet.

8. Terminal selon la revendication 1, **caractérisé en ce que** ladite deuxième application (M_JEU) est une application de jeu en réseau

9. Terminal selon la revendication 1, **caractérisé en ce qu'**au moins une application parmi la première application et ladite au moins une deuxième application, est hébergée dans un serveur distant et est utilisée à distance par le terminal.

10. Procédé de collecte d'informations mis en œuvre dans un premier terminal de télécommunications (TERM1), ce procédé comportant :
- une étape (E10) pour obtenir de manière automatique au moins une information (I_GSM, I_ALERT, I_LOC) représentative d'un usage d'au moins une première application (M_GSM, M_ALERT, M_MSG, M_LOC) par ledit premier terminal (TERM1) ; et
- une étape (E20) de communication de ladite au moins une information d'usage à un serveur de présence (SP) accessible par un deuxième terminal (TERM2) pour déterminer un statut de présence associé à au moins une deuxième application (M_VOIP, M_JEU) utilisable par ledit premier terminal, ladite deuxième application et ladite première application ne communiquant pas entre elles, ledit procédé de collecte (COLL) étant mis en œuvre par un module de collecte intégré à un système d'exploitation dudit terminal (TERM1), ledit module de collecte (COLL) offrant un point d'entrée (IF2) à ladite au moins une deuxième application (M_JEU, M_VOIP).

11. Programme d'ordinateur (PG) comportant des instructions pour la mise en œuvre d'un procédé de collecte d'informations selon la revendication 10 lorsque ce programme est exécuté par un ordinateur.

12. Support d'enregistrement (11) lisible par un ordinateur sur lequel est enregistré un programme d'ordinateur comprenant des instructions pour l'exécution des étapes d'un procédé de collecte d'informations selon la revendication 10.

## Patentansprüche

1. Kommunikationsendgerät (TERM1), das ein Modul zum Sammeln von Informationen (COLL) umfasst, wobei dieses Modul Folgendes umfasst:
- Mittel (IF1) zum automatischen Erhalten mindestens einer Information (I_GSM, I_ALERT, I_LOC), die eine Benutzung mindestens einer ersten Anwendung (M_GSM, M_ALERT, M_MSG, M_LOC) durch das Endgerät (TERM1) anzeigt; und
- Mittel (IF2) zum automatischen Kommunizieren der mindestens einen Benutzungsinformation an einen Präsenzserver (SP), auf den ein zweites Endgerät (TERM2) zugreifen kann, um einen Präsenzstatus zu bestimmen, der mit mindestens einer zweiten Anwendung (M_VOIP, M_JEU), die durch das Endgerät (TERM1), welches das Sammelmodul (COLL) umfasst, verwendet werden kann, assoziiert ist, wobei die zweite Anwendung und die erste Anwendung untereinander nicht kommunizieren, wobei das Sammelmodul (COLL) in ein Betriebssystem des Endgeräts (TERM1) integriert ist, wobei das Sammelmodul (COLL) der mindestens einen zweiten Anwendung (M_JEU, M_VOIP) einen Zugangspunkt (IF2) bereitstellt.

2. Endgerät nach Anspruch 1, wobei das Endgerät ein Mobiltelefon ist, **dadurch gekennzeichnet, dass**:
- die erste Anwendung (M_GSM) eine Mobiltelefonieanwendung ist; und dass:
- die Benutzungsinformation (I_GSM) eine Information ist, die anzeigt, dass ein Anruf zu der ersten Anwendung (M_GSM) hergestellt ist oder nicht.

3. Endgerät nach Anspruch 2, **dadurch gekennzeichnet, dass**:
- die Benutzungsinformation (I_GSM) eine Information ist, die eine Kennung eines Kontakts, der gerade unter Verwendung der ersten Anwendung (M_GSM) kommuniziert, umfasst.

4. Endgerät nach Anspruch 1, wobei das Endgerät ein Mobiltelefon ist, **dadurch gekennzeichnet, dass**:
- die erste Anwendung (M_ALERT) in der Lage ist, bei Empfang eines eingehenden Anrufs, der durch das Endgerät (TERM1) empfangen wird, einen Alarm zu generieren; und dass:
- die Benutzungsinformation (I_ALERT) einen Typ des Alarms anzeigt.

5. Endgerät nach Anspruch 1, **dadurch gekennzeichnet, dass**:
- die erste Anwendung (M_MSG) eine Nachrichtenanwendung ist; und dass:
- die Benutzungsinformation (I_MSG) anzeigt, ob eine Nachricht gerade erstellt wird oder nicht.

6. Endgerät nach Anspruch 1, **dadurch gekennzeichnet, dass**:
- die erste Anwendung (M_LOC) eine Geolokalisierungsanwendung ist; und dass:
- die Benutzungsinformation (I_LOC) eine Lokalisierungsinformation des Endgeräts anzeigt.

7. Endgerät nach Anspruch 1, **dadurch gekennzeichnet, dass** die zweite Anwendung (M_VOIP) eine Voice-over-IP-Anwendung ist.

8. Endgerät nach Anspruch 1, **dadurch gekennzeichnet, dass** die zweite Anwendung (M_JEU) eine Netzwerkspielanwendung ist.

9. Endgerät nach Anspruch 1, **dadurch gekennzeichnet, dass** mindestens eine Anwendung von der ersten Anwendung und der mindestens einen zweiten Anwendung in einem Fernserver untergebracht ist und durch das Endgerät aus der Entfernung verwendet wird.

10. Verfahren zum Sammeln von Informationen, das in einem ersten Telekommunikationsendgerät (TERM1) implementiert wird, wobei dieses Verfahren Folgendes umfasst:
- einen Schritt (E10) des automatischen Erhaltens mindestens einer Information (I_GSM, I_ALERT, I_LOC), die eine Benutzung mindestens einer ersten Anwendung (M_GSM, M_ALERT, M_MSG, M_LOC) durch das erste Endgerät (TERM1) anzeigt; und
- einen Schritt (E20) des Kommunizierens der mindestens einen Benutzungsinformation an einen Präsenzserver (SP), auf den ein zweites Endgerät (TERM2) zugreifen kann, um einen Präsenzstatus zu bestimmen, der mit mindestens einer zweiten Anwendung (M_VOIP, M_JEU), die durch das erste Endgerät verwendet werden kann, assoziiert ist, wobei die zweite Anwendung und die erste Anwendung untereinander nicht kommunizieren, wobei das Sammelverfahren (COLL) durch ein Sammelmodul, das in ein Betriebssystem des Endgeräts (TERM1) integriert ist, implementiert wird, wobei das Sammelmodul (COLL) der mindestens einen zweiten Anwendung (M_JEU, M_VOIP) einen Zugangspunkt (IF2) bereitstellt.

11. Computerprogramm (PG), das Anweisungen zum Implementieren eines Verfahrens zum Sammeln von Informationen nach Anspruch 10 umfasst, wenn dieses Programm von einem Computer ausgeführt wird.

12. Computerlesbares Aufzeichnungsmedium (11), auf dem ein Computerprogramm aufgezeichnet ist, das Anweisungen zum Ausführen der Schritte eines Verfahrens zum Sammeln von Informationen nach Anspruch 10 beinhaltet.

## Claims

1. Communications terminal (TERM1) including a module (COLL) for collecting information, which module includes:
- means (IF1) for automatically obtaining at least one item of information (I_GSM, I_ALERT, I_LOC) representative of a usage of at least one first application (M_GSM, M_ALERT, M_MSG, M_LOC) by said terminal (TERM1); and
- means (IF2) for automatically communicating said at least one item of usage information to a presence server (SP) that can be accessed by a second terminal (TERM2) in order to determine a presence status associated with at least one second application (M_VOIP, M_JEU) that can be used by said terminal (TERM1) which includes said collection module (COLL), with said second application and said first application not communicating with one another, said collection module (COLL) being integrated into an operating system of said terminal (TERM1), said collection module (COLL) offering an entry point (IF2) to said at least one second application (M_JEU, M_VOIP).

2. Terminal according to Claim 1, said terminal being a mobile telephone, **characterized in that**:
- said first application (M_GSM) is a mobile telephony application; and **in that**:
- said item of usage information (I_GSM) is an item of information representing the fact that a call is or is not set up with said first application (M_GSM).

3. Terminal according to Claim 2, **characterized in that**:
- said item of usage information (I_GSM) is an item of information including an identifier of a contact currently communicating by using said first application (M_GSM).

4. Terminal according to Claim 1, said terminal being a mobile telephone, **characterized in that**:
- said first application (M_ALERT) is able to generate an alert upon reception of an incoming call received by said terminal (TERM1); and **in that**:
- said item of usage information (I_ALERT) represents a type of said alert.

5. Terminal according to Claim 1, **characterized in that**:
- said first application (M_MSG) is a messaging application; and **in that**:
- said item of usage information (I_MSG) represents the fact that a message is or is not currently being composed.

6. Terminal according to Claim 1, **characterized in that**:
- said first application (M_LOC) is a geolocation application; and **in that**:
- said item of usage information (I_LOC) represents an item of location information regarding the location of said terminal.

7. Terminal according to Claim 1, **characterized in that** said second application (M_VOIP) is a voice over Internet application.

8. Terminal according to Claim 1, **characterized in that** said second application (M_JEU) is an online gaming application.

9. Terminal according to Claim 1, **characterized in that** at least one application from among the first application and said at least one second application is hosted in a remote server and is used remotely by the terminal.

10. Method for collecting information, implemented in a first telecommunications terminal (TERM1), said method including:
- a step (E10) for automatically obtaining at least one item of information (I_GSM, I_ALERT, I_LOC) representative of a usage of at least one first application (M_GSM, M_ALERT, M_MSG, M_LOC) by said first terminal (TERM1); and
- a step (E20) of communicating said at least one item of usage information to a presence server (SP) that can be accessed by a second terminal (TERM2) in order to determine a presence status associated with at least one second application (M_VOIP, M_JEU) that can be used by said first terminal, with said second application and said first application not communicating with one another, said collection method (COLL) being implemented by a collection module integrated into an operating system of said terminal (TERM1), said collection module (COLL) offering an entry point (IF2) to said at least one second application (M_JEU, M_VOIP).

11. Computer program (PG) including instructions for implementing a method for collecting information according to Claim 10 when said program is executed by a computer.

12. Computer-readable recording medium (11) on which there is recorded a computer program comprising instructions for executing the steps of a method for collecting information according to Claim 10.
